Europäisches Patentamt

European Patent Office

Office européen des brevets

(11) Numéro de publication: **0 052 688**

**A1**

(12) ## DEMANDE DE BREVET EUROPEEN

(21) Numéro de dépôt: **80401684.8**

(22) Date de dépôt: **25.11.80**

(51) Int. Cl.³: **B 23 K 11/08**

(43) Date de publication de la demande:
**02.06.82  Bulletin  82/22**

(84) Etats contractants désignés:
**AT BE CH DE GB IT LI LU NL SE**

(71) Demandeur: **ETUDES GENERALES D'INGENIERIE MECANIQUE ET OUTILLAGES (EGIMOT) Société dite**
**14, rue Aurélien Masse**
**Agnetz F-60600 Clermont (Oise)(FR)**

(71) Demandeur: **Société VALEXY**
**41-43, rue Pergolèse**
**F-75116 Paris(FR)**

(71) Demandeur: **SOCIETE D'OPTIQUE, PRECISION ELECTRONIQUE ET MECANIQUE - SOPELEM**
**102 rue Chaptal**
**F-92300 Levallois-Perret(FR)**

(72) Inventeur: **Planeau, René**
**14, rue Aurélien Masse**
**Agnetz F-60600 Clermont(FR)**

(72) Inventeur: **Grancher, Raymond**
**5, Allée du Rond Perdu**
**Emerainville F-77200 Torcy(FR)**

(72) Inventeur: **Pron, Henri**
**6, rue Fabert**
**F-54400 Longwy(FR)**

(74) Mandataire: **Ducas, Michel Louis Marie  et al,**
**Cabinet Boettcher 23, rue La Boétie**
**F-75008 Paris(FR)**

(54) **Bloc forgeur pour la fabrication de tubes métalliques.**

(57) L'invention concerne un bloc forgeur pour le forgeage de la ligne de soudure d'un tube métallique.

Un galet 8 à axe vertical poussé par un vérin 9 est asservi en position symétrique d'un galet 8' à axe vertical poussé par un vérin 9', lui-même soumis à une pression de consigne. Deux galets obliques 16 poussés par des vérins obliques 18 agissent sur les lèvres. Le galet 16 subissant la plus forte réaction de poussée est asservi en position d'égale hauteur à celui qui reçoit la plus faible réaction de poussée.

L'invention s'applique au forgeage de la ligne de soudure d'un tube métallique.

Fig.1

EP 0 052 688 A1

**0052688**

Bloc forgeur pour la fabrication de tubes métalliques.

L'invention a pour objet un bloc forgeur pour le forgeage de la ligne de soudure d'un tube métallique, conformé par déformation d'une bande ou feuillard, dont les lèvres ont été portées à la température de forgeage pour y être poussées l'une contre l'autre tandis que le tube en formation y est entraîné en défilement dans un espace délimité, au moins partiellement, par les surfaces de roulement d'au moins deux galets forgeurs pouvant être poussés mutuellement en coulissement vers le tube, chacun au moyen d'un vérin à double effet associé.

L'invention a également pour objet une variante comportant, en outre, une paire de galets forgeurs contigus, symétriquement obliques et opposés à un galet forgeur fixe d'axe contenu perpendiculairement dans le plan des axes des deux galets forgeurs principaux, les surfaces de roulement desdits galets obliques agissant, chacune, directement sur l'une des lèvres à souder par forgeage par poussée convergente en coulissement vers le tube au moyen d'un vérin oblique à double effet.

Dans les blocs forgeurs connus, un ouvrier doit en permanence agir sur les vérins/pour assurer la poussée ou un système mécanique nécessaire au forgeage et pour égaliser en hauteur les lèvres à souder. Il s'agit en fait, d'une opération de régulation manuelle difficile pour l'opérateur, dont l'intervention provoque inévitablement des retards et des pompages dans la chaîne de régulation dont il fait partie, car ce travail nécessite une attention soutenue de l'opérateur.

Le but de l'invention est de proposer un nouveau bloc forgeur à régulation entièrement automatisée, capable d'assurer, sans incident, le guidage et la formation du tube, de protéger les organes mécaniques du bloc forgeur contre les surlargeurs du feuillard ou de la bande brute de laminage, de maintenir une pression de forgeage constante pour chaque réglage donné, tout en assurant un positionnement précis de la ligne de soudure et en garantissant un bon affleurement des lèvres pendant et après soudure.

Ces buts sont atteints, selon l'invention, dans un bloc forgeur du type décrit au début, par le fait que :

- les deux vérins comportent, chacun, un capteur de position, l'un d'eux, au moins, comporte un capteur de pression et/ou de force de poussée,

- le circuit de commande des vérins comporte des moyens d'asservissement de l'un des vérins, servant de vérin mené, à une position de son galet associé symétrique de la position actuelle du galet associé à l'autre vérin, lequel comporte le ou l'un des capteur(s) de pression et/ou de force de poussée et sert de vérin meneur,

- le circuit de commande des vérins comporte des moyens d'asservissement du vérin meneur à une grandeur de consigne.

Selon un mode de réalisation préféré, la grandeur de consigne d'asservissement du vérin meneur est une consigne de position ou de pression et/ou de force de poussée.

Lorsque la grandeur de consigne sera une consigne de position, ce sera pour écarter les galets lors d'interruption ou au démarrage de la ligne, mais lorsque la grandeur de consigne sera une consigne de pression et/ou de force de poussée, ce sera pour obtenir les conditions opératoires normales de forgeage. C'est pourquoi il est prévu un moyen de sélection entre la consigne de position et la consigne de pression et/ou de force de poussée.

On voit que grâce aux moyens de l'invention, la pression de forgeage est maintenue quelles que soient les variations dimensionnelles accidentelles du feuillard ou de la bande dont les lèvres sont à souder. Simultanément, l'asservissement en position du galet mené garantit la stabilité de l'axe du tube sur une ligne de référence, ce qui est très important lorsqu'il y a trois ou cinq galets forgeurs, comme on le verra plus loin.

Pour que le bloc forgeur soit adaptable à une large gamme de dimensions de tubes, de températures de forgeage et de types de bandes ou feuillard, il est prévu qu'au moins l'une des deux grandeurs de consigne de position et de pression et/ou force de poussée est réglable en valeur.

Dans le cas de la variante, rappelée précédemment, comportant cinq galets, dont deux obliques, il est conforme à l'invention que :

- les deux vérins obliques comportent, chacun, un capteur de position et un capteur de pression et/ou force de poussée, et que

-. le circuit de commande des vérins obliques comprenne :

- des moyens d'asservissement sélectif de l'un des deux vérins, servant alors de vérin mené, à une position de coulissement de son galet associé identique à la position actuelle de coulissement de l'autre galet oblique associé à l'autre vérin oblique, servant alors de vérin meneur,

- un moyen d'inversion de l'asservissement sélectif l'un à l'autre des deux vérins obliques, et

- des moyens d'asservissement du vérin meneur sélectionné à une valeur de consigne de la pression et/ou de la force de poussée.

Pour que le vérin meneur soit sélectionné automatiquement, il est conforme à l'invention que :

- le bloc forgeur comporte un comparateur des signaux délivrés respectivement par les deux capteurs de pression et/ou de force de poussée délivrant un signal d'écart relatif,

- le signal d'écart relatif soit dirigé sur le moyen d'inversion de l'asservissement l'un à l'autre des deux vérins obliques,

- ledit moyen d'inversion asservisse le vérin dont le capteur de pression et/ou de force de poussée délivre le signal de plus forte pression et/ou de force de poussée à être mené par l'autre.

Dans ces conditions, c'est bien le galet le plus repoussé par la lèvre vis-à-vis, qui recevra une force de poussée supplémentaire tendant à mettre les deux lèvres en affleurement l'une de l'autre.

Pour que la régulation exclue toute oscillation ou pompage, il est conforme à l'invention que le moyen d'inversion ne soit sensible au signal d'écart qu'au-delà d'un seuil absolu, qui pourra être très faible, pourvu, bien entendu, qu'il soit supérieur à l'erreur de mesure de l'écart.

En raison de leurs facilités de réglage et asservissement et de leur vitesse de mise en position, les vérins seront, de préférence, hydrauliques.

D'autres caractéristiques et avantages de l'invention ressortiront de la description qui sera donnée ci-après uniquement à titre d'exemple, d'un mode de réalisation de ladite invention. On se reportera à cet effet aux figures annexées, dans lesquelles :

- la figure 1 est une vue en coupe transversale, par rapport au sens de défilement du tube, d'un bloc forgeur selon l'invention, dont pour la simplification, on n'a pas représenté l'organe de chauffage,

- la figure 2 est une vue schématique d'un servo-vérin avec ses accessoires,

- la figure 3 est une variante du mode de réalisation de la figure 2,

- les figures 4 et 5 sont des schémas explicatifs du mode d'action des galets latéraux du bloc de la figure 1,

- les figures 6 et 7 sont les schémas des circuits d'asservissement des galets latéraux du bloc de la figure 1,

- les figures 8 et 9 sont des schémas explicatifs du mode d'action des galets obliques du bloc de la figure 1,

- les figures 11 et 12 sont des schémas des circuits d'asservissement des galets obliques du bloc de la figure 1,

- la figure 12 est le diagramme caractéristique de réponse du circuit basculeur des figures 11 et 12.

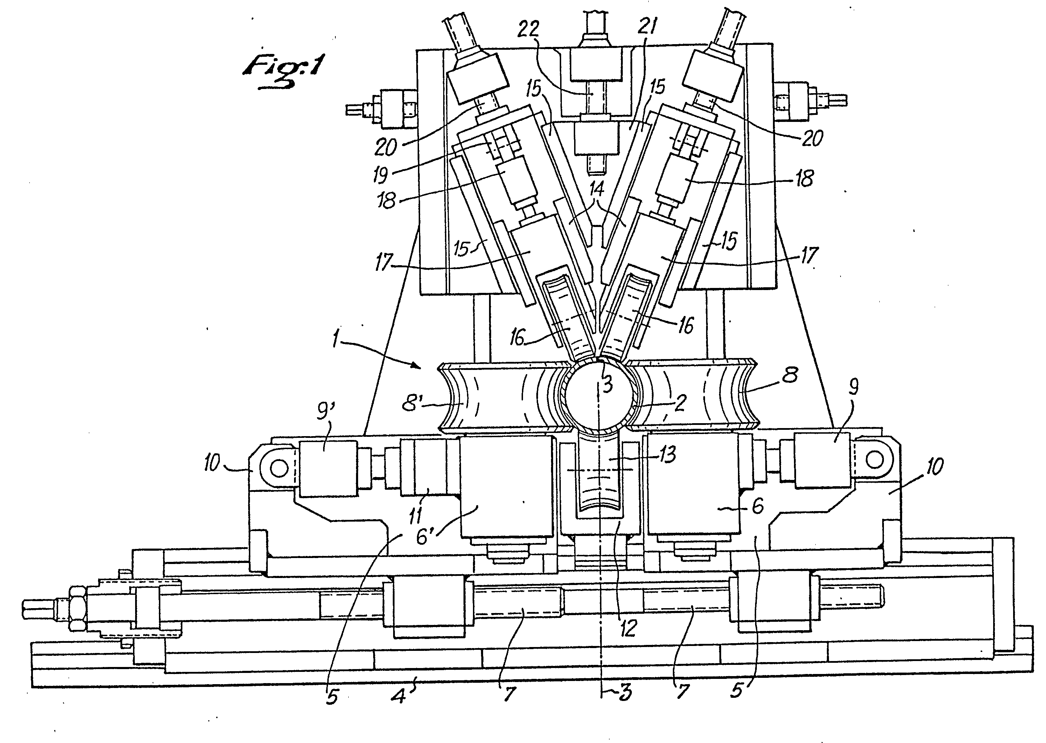

Le bloc forgeur 1 représenté en coupe transversale à la figure 1 est conçu pour le forgeage de la ligne de soudure 3 d'un tube 2 défilant dans une direction perpendiculaire au plan de la figure. Le bloc proprement dit est monté sur un bâti 4 sur lequel sont montés deux chariots 5 symétriques portant chacun un bloc 6, 6' et mobiles chacun en coulissement de part et d'autre d'une ligne médiane $z$ grâce à des vis de réglage de dégagement 7 synchronisées et à filets de sens contraires. Chacun des blocs 6, 6' porte un galet forgeur 8, 8' latéral d'axe vertical et à génératrice concave, l'intervalle entre les deux galets 8, 8' définissant la courbure du tube à souder. Chaque bloc 6, 6' est monté mobile en translation sur son chariot 5 et commandé en translation par une extrémité d'un servo-vérin hydraulique 9, 9' dont l'autre extrémité est liée à une console 10 du chariot. Cependant l'extrémité du servo-vérin 9' commandant le bloc 6' portant le galet 8' est liée à ce bloc 6'par l'intermédiaire d'un dynamomètre 11. Le bâti 4 porte en outre un support 12 pour un galet 13 à axe horizontal dirigé dans le plan de la figure.

La partie supérieure du bâti 4 porte des chariots 14 montés sur un support 21 à glissières 15 pour le réglage d'approche par des vis 20 de deux galets supérieurs symétriquement oblique 16 et opposés au galet 13. Chaque galet 16 est porté par un support 17 coulissant sur son chariot 14 et commandé en translation, selon le plan de la figure, par une extrémité d'un servo-vérin hydraulique 18, dont l'autre extrémité est liée à une attache 19 du chariot. L'ensemble du support 21 à glissières 15 est réglable en hauteur par une vis 22.

La structure générale, telle que décrite jusqu'ici est assez semblable à la structure générale des blocs forgeurs à vérins mécaniques connus, sauf que les vérins sont des servo-vérins hydrauliques.

On décrira maintenant les servo-vérins 9, 9' et 18 en regard des figures 2 et 3.

Une servo-valve 23 pour les servo-vérins est commandée en courant. Elle délivre un débit d'huile sur ses deux orifices de sortie proportionnellement à son courant de commande, le sens du débit étant fonction du sens de ce courant. La vitesse de déplacement de la tige 24 du vérin est donc proportionnelle au courant de la servo-valve 23 et sons sens de déplacement dépend de la polarité de celui-ci. Ceci suppose que la charge extérieure au vérin 9, 9', 18 soit constante. Dans le cas où celle-ci varie, la règle de proportionnalité entre la vitesse de la tige 24 du vérin et l'intensité du courant est modifiée selon des lois connues.

Un capteur 25 de position associé à chaque vérin 9, 9', 18 est du type à transformateur différentiel variable linéaire (LVDT) ou un potentiomètre linéaire. Il délivre un signal électrique proportionnel à la position du noyau ou du curseur solidaire mécaniquement de la tige 24 du vérin.

Le dynamomètre 11 associé au vérin 9' est du type à jauges de contraintes montées en pont de Wheastone. Il délivre un signal électrique proportionnel à la force de poussée mesurée.

L'autre vérin 9, qui sera le servo-vérin mené de l'invention, est identique au premier, sauf en ce qui concerne le capteur dynamométrique qu'il ne possède pas.

Les servo-vérins 18 sont de construction semblable à celle des vérins, 9, 9', à la force près, mais le capteur de poussée y est remplacé, en simple variante, par deux capteurs de pression 26.

Fonctionnellement les deux variantes avec capteur dynamométrique 11 ou avec capteur de pression sont équivalentes et le choix de l'un ou l'autre type n'est pas déterminant selon l'invention, étant entendu que les signaux électriques délivrés par les capteurs de pression sont traités de telle manière que l'information résultante soit une information de force de poussée.

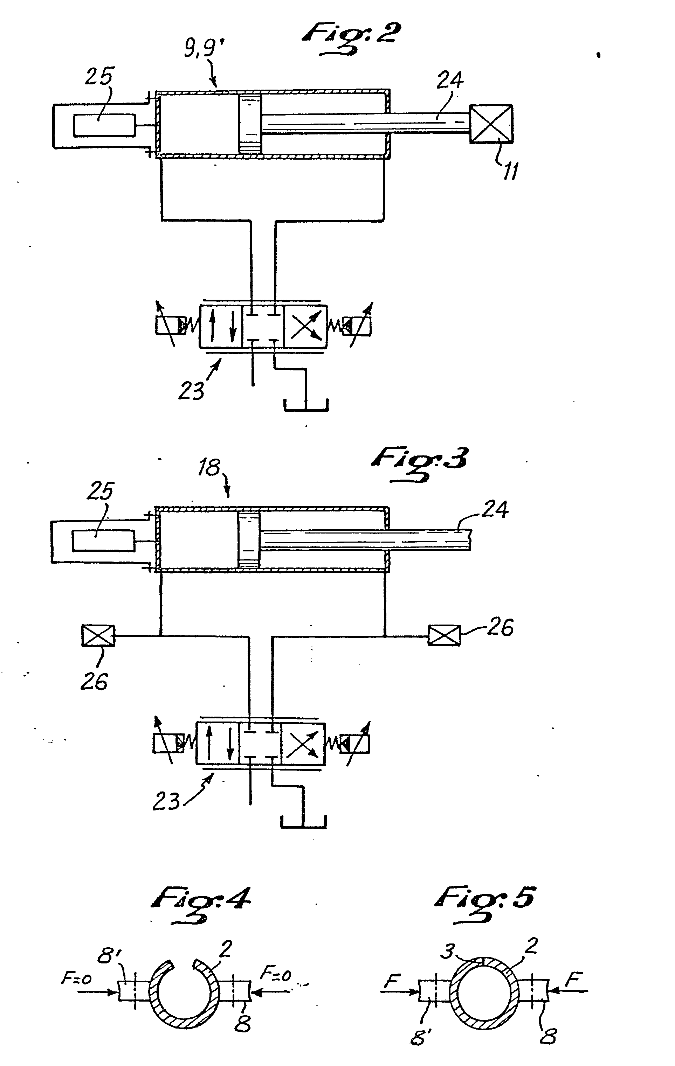

Les figures 4 et 5 représentent la position relative du tube 2 en formation et des galets latéraux 8 et 8' poussant avec une force nulle (figure 4) ou avec la force de poussée de consigne F (figure 5).

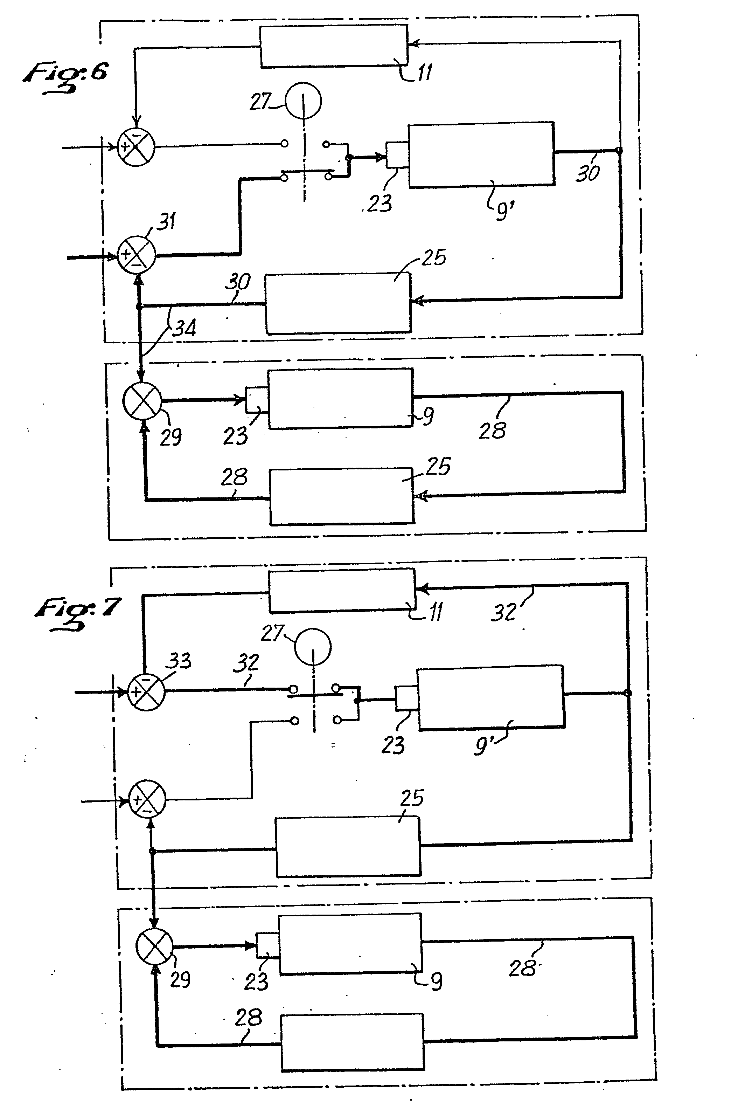

Les figures 6 et 7 représentent toutes deux les circuits d'asservissement des vérins 9 et 9', la seule différence étant qu'à la figure 6 il y a asservissement total en position, par exemple pour le repos ou la position d'approche, tandis qu'à la figure 7 il y a asservissement en effort de poussée pour soudure du tube. Sur chacune des deux figures 6 et 7, on a représenté en trait fort les boucles d'asservissement alors en opération.

Un relai 27 permet de passer de l'asservissement de position (figure 6) à l'asservissement d'effort (figure 7) et vice-versa.

A la figure 6 on voit une boucle d'asservissement 28 dans laquelle un comparateur 29 mesure l'écart entre les signaux délivrés respectivement par une ligne 34 et par la boucle 28 par les deux capteurs de position 25 des vérins 9 et 9' et délivre un signal d'écart à la servo-vanne 23 qui agit sur le vérin 9 jusqu'à ce que l'écart soit nul. Les deux vérins étant identiques, et moyennant un réglage de symétrie au départ, on est assuré qu'en toutes circonstances, dans les limites de pression et de puissance prévues, le vérin 9 sera parfaitement symétrique du vérin 9', par rapport à la ligne z.

De son côté le relais 27, qui est dans sa position non excitée, ferme sur la servo-vanne, 23, associée au servo-vérin 9', une boucle d'asservissement 30, dans laquelle un comparateur 31 à affichage de consigne mesure l'écart entre la valeur de consigne et le signal, éventuellement conformé, délivré par le capteur de position 25 du servo-vérin 9' pour délivrer un signal d'écart à la servo-vanne 23 qui agit sur le vérin 9' dans le sens tendant à annuler l'écart.

A la figure 7, la boucle d'asservissement 28 du vérin 9 n'est pas modifiée par rapport à la figure 6. Par contre la boucle d'asservissement 30 du vérin menant 9' est ouverte par excitation du relais 27 qui ferme une boucle d'asservissement 32 sur un comparateur 33 à affichage de consigne de force de poussée, qui mesure l'écart entre cette valeur de consigne et le signal, éventuellement conformé, délivré par le capteur dynamométrique 11 du servo-vérin 9' pour délivrer un signal d'écart à la servo-vanne 23 qui agit sur le vérin 9' dans le sens tendant à annuler l'écart. La ligne 34 étant connectée en permanence, le signal de position délivré par le capteur 25 du vérin 9' est appliqué au comparateur 29 qui provoque immédiatement la mise en position du vérin 9, c'est-à-dire de son galet 8, exactement symétrique en position et en poussée de celle du vérin 9', c'est-à-dire de son galet 8'.

Telle qu'elle vient d'être décrite en regard des figures 1 à 7 pour un bloc forgeur à cinq galets, l'invention s'applique également aux blocs forgeurs à deux ga-

lets du type convenant pour les tubes de petit diamètre.

On décrira maintenant les moyens additionnels de l'invention concernant le bloc forgeur de la figure 1.

La figure 8 représente un tube en formation, dont les lèvres sont écartées l'une par rapport à l'autre avec un écart 35 exagéré sur la figure pour une meilleure
visualisation. La figure 9 représente le même tube en formation
dans le bloc forgeur de la figure 1.

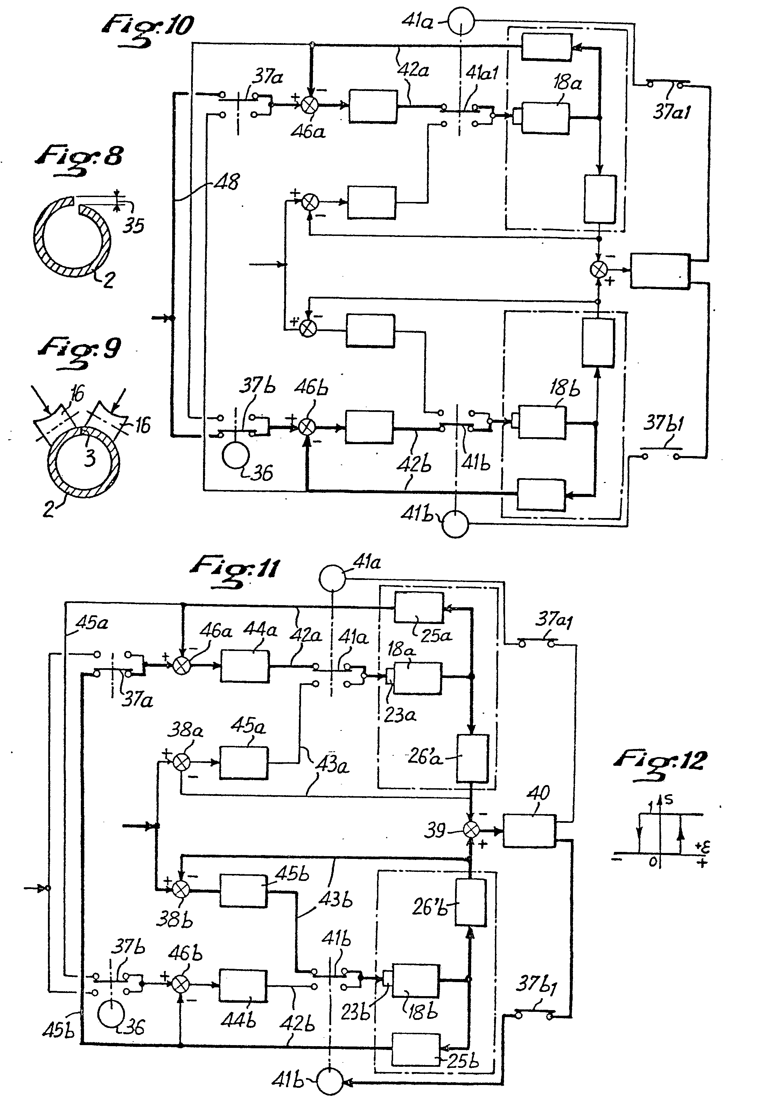

Les figures 10 et 11 représentent toutes
deux les circuits d'asservissement des vérins 16, la seule différence étant qu'à la figure 10 il y a asservissement total en
position, par exemple pour le repos ou la position d'approche,
tandis qu'à la figure 11 il y a asservissement en effort de
poussée des lèvres en affleurement l'une de l'autre pour soudure du tube serré simultanément par les galets 8 et 8' exerçant
la force de poussée horizontale de consigne. Sur chacune des
deux figures 10 et 11 on a représenté en trait fort les boucles
d'asservissement alors en opération.

Un relais 36 commandant des contacts 37
permet de passer de l'asservissement de position (figure 10)
à l'asservissement d'effort (figure 11) et vice-versa.

On se référera d'abord à la figure 11, où
les vérins 18 ont été distingués respectivement par les désignations 18a et 18b et ainsi de suite pour les accessoires qui
leurs sont associés. Le relais 36 est en position excitée fermant des contacts $37a_1$ et $37b_1$ et actionnant dans la position
représentée des contacts de basculeurs 37a et 37b, dont le rôle
sera exposé plus loin. Autour des vérins 18 et de leurs accessoires sont montés des circuits d'asservissement identiques
en tous points. Les pressions mesurées sur les capteurs de
pression 26 sont converties par des codeurs respectivement 26'a
et 26'b délivrant des signaux de force de poussée comparables
à une même valeur de consigne introduite aux deux entrées convenables de deux comparateurs 38a, 38b. Ces mêmes signaux de
force de poussée sont amenés à l'entrée d'un comparateur 39
qui les soustrait l'un à l'autre et envoie le signal résultant
en sens ± et en valeur ε à un circuit logique 40 basculeur
dont la fonction sera exposée plus loin. Selon l'état de bascule du circuit logique 40, l'un ou l'autre de deux relais 41a ou 41b est excité à travers le contact, respectivement $37a_1$ ou $37b_1$, ces deux contacts étant l'un et l'autre fermés par le relais 36 comme il a été dit. Sur la figure on a supposé que le relais 41b est excité, le relais 41a ne l'étant pas. Lorsque le relais 41a n'est pas excité un contact $41a_1$ ferme une boucle d'asservissement 42a comprenant le servo-vérin 18a-23a, son capteur de position 25a et un comparateur 46a du signal de position au signal de position du capteur de position 25b de l'autre servo-vérin 18b-23b, dont le signal est amené au comparateur 46a par une ligne 45b et le contact 37a dans la position excitée du relais 36. Le signal d'écart du comparateur 46a est envoyé au servo-vérin à travers un amplificateur de signal 44a. De cette façon le vérin 18a sera mené par le vérin 18b aussi longtemps que la bascule du circuit logique 40 n'excitera pas le relai 41a.

Par ailleurs l'excitation du relais 41b ouvre le circuit 42b symétrique du circuit 42a par basculement du contact $41b_1$ qui ferme alors un circuit de régulation 43b incluant le servo-vérin 23b-18b, son codeur 26'b de signal de force de poussée et un comparateur 38b de ce signal à une valeur de consigne de force de poussée. Dans la configuration de la figure 11, on voit que le vérin 18a est mené en position asservie à la position du vérin 18b, lui-même asservi en force de poussée par une valeur de consigne.

On reviendra maintenant sur le rôle du discriminateur 39 et du circuit logique 40. Ainsi qu'il a été dit, le circuit logique 40 reçoit une information du discriminateur 39 sur le sens et la valeur de la différence des signaux de sortie des codeurs 26'a et 26'b de signaux de force de poussée. Le circuit logique 40 donne un signal d'excitation s ou $\overline{s}$ à un seul des deux relais polarisés 41a ou 41b. Selon l'invention le sens du signal d'excitation est celui qui excite celui des deux relais qui est associé au vérin le moins chargé, à savoir le signal $\overline{s}$ excitant le relais 41 b à la figure 11. Pour éviter des basculements pour des valeurs de signal inférieures aux erreurs de mesures et pour éviter des battements, le circuit basculeur 40 est un circuit à hystérésis ne répondant en basculement qu'au-delà d'une valeur absolue donnée $\varepsilon_o$ du discriminateur 39, ainsi qu'il est sommairement indiqué par la courbe de réponse représentée à la figure 12.

Si le signal ayant la valeur $\bar{s}$ à la figure 11 prend la valeur s, on comprend aisément que le vérin 18a devient meneur du vérin 18b alors mené jusqu'à ce que le signal revienne à la valeur $\bar{s}$ et ainsi de suite.

A la figure 10, le relais 36 n'est plus excité, ce qui ouvre les contacts $37a_1$ et $37b_1$, d'où la retombée des deux relais 41a et 41b, ce qui met en service simultanément les deux boucles d'asservissement en position 42a et 42b. Simultanément le basculement des contacts 37a et 37b connecte les entrées des deux comparateurs 46a et 46b sur une ligne 48 y amenant un signal de valeur réglable de consigne de position à laquelle se trouvent donc asservis simultanément les deux vérins.

La situation de la figure 10 est celle dans laquelle on pourra commander les deux vérins en recul, tandis que la situation de la figure 11est la situation de travail conduisant à un plus grand effort des galets 16 sur la lèvre la plus saillante, en inversant le côté de ce plus grand effort lorsque le défaut de lèvres s'inverse. Lorsqu'il n'y a pas de défaut décélable de lèvre, les deux vérins sont exactement à la même hauteur et exercent la même force de poussée.

0052688

## REVENDICATIONS

1) Bloc forgeur pour le forgeage de la ligne de soudure d'un tube métallique, conformé par déformation d'une bande ou feuillard, dont les lèvres ont été portées à la température de forgeage pour y être poussées l'une contre l'autre tandis que le tube en formation y est entraîné en défilement dans un espace délimité, au moins partiellement, par les surfaces de roulement d'au moins deux galets forgeurs pouvant être poussés mutuellement en coulissement vers le tube, chacun au moyen d'un vérin à double effet associé, caractérisé en ce que :

- les deux vérins (9, 9') comportent, chacun, un capteur de position (25), l'un d'eux, au moins (9'), comporte un capteur de pression et/ou de force de poussée,

- le circuit de commande des vérins (9, 9') comporte des moyens d'asservissement (28) de l'un des vérins (9), servant de vérin mené, à une position de son galet associé (8) symétrique de la position actuelle du galet associé (8') à l'autre vérin (9'), lequel comporte le ou l'un des capteur(s) de pression et/ou de force de poussée et sert de vérin meneur(11),

- le circuit de commande des vérins comporte des moyens d'asservissement du vérin meneur (9') à une grandeur de consigne.

2) Bloc forgeur selon la revendication 1, caractérisé en ce que la grandeur de consigne d'asservissement du vérin meneur est une consigne de position ou de pression et/ou de force de poussée.

3) Bloc forgeur selon la revendication 2, caractérisé en ce qu'il comprend un moyen de sélection (27) entre la consigne de position et la consigne de pression et/ou de force de poussée.

4) Bloc forgeur selon la revendication 2, caractérisé en ce qu'au moins l'une des deux grandeurs de consigne de position et de pression et/ou force de poussée est réglable en valeur.

5) Bloc-forgeur selon la revendication 1, comportant, en outre, une paire de galets forgeurs contigus, symétriquement obliques et opposés à un galet forgeur fixe d'axe contenu perpendiculairement dans le plan des axes des deux galets forgeurs principaux, les surfaces de roulement desdits galets obliques agissant, chacune, directement sur l'une des lèvres à souder par forgeage par poussée convergente en coulissement vers le tube au moyen d'un vérin oblique à double effet, caractérisé en ce que :

       - les deux vérins obliques (18) comportent, chacun, un capteur de position (25) et un capteur de pression (26) et/ou force de poussée, et

       - le circuit de commande des vérins obliques (18) comprend :

       - des moyens d'asservissement (42a, 42b) sélectif de l'un des deux vérins (18) servant alors de vérin mené, à une position de coulissement de son galet associé (16) identique à la position actuelle de coulissement de l'autre galet oblique associé (16) à l'autre vérin oblique (18), servant alors de vérin meneur,

       - un moyen d'inversion (40) de l'asservissement sélectif l'un à l'autre des deux vérins obliques (18), et

       - des moyens d'asservissement (38a, 38b) du vérin meneur (18) sélectionné à une valeur de consigne de la pression et/ou de la force de poussée.

6) Bloc-forgeur selon la revendication 5, caractérisé en ce que :

       - il comporte un comparateur (39) des signaux délivrés respectivement par les deux capteurs de pression et/ou de force de poussée ou leurs codeurs associés (26'a, 26'b) délivrant un signal d'écart relatif,

       - le signal d'écart relatif est dirigé sur le moyen d'inversion de l'asservissement (40) l'un à l'autre des deux vérins obliques (18),

       - ledit moyen d'inversion (40) asservit le vérin (18) dont le capteur de pression et/ou de force de poussée

0052688

ou son codeur associé (26'a, 26'b) délivre le signal de plus forte pression et/ou de force de poussée à être mené par l'autre.

7) Bloc-forgeur selon la revendication 6, caractérisé en ce que le moyen d'inversion (40) n'est sensible au signal d'écart qu'au-delà d'un seuil absolu ( $\varepsilon_o$ ).

8) Bloc-forgeur selon la revendication 6, caractérisé en ce qu'il comprend un moyen commandable (36) d'asservissement simultané des deux vérins obliques (18) à une position donnée identique de coulissement de leurs galets associés (figure 11).

9) Bloc-forgeur selon la revendication 5, caractérisé en ce que la valeur de consigne de la pression et/ou de la force de poussée est réglable.

10) Bloc-forgeur selon la revendication 8, caractérisé en ce que la position donnée de coulissement est réglable.

11) Bloc forgeur selon l'une quelconque des revendications 1 à 10, caractérisé en ce que les vérins (9, 9', 18) sont hydrauliques.

*Fig.1*

PL.1-4

0052688

*Fig.2*

*Fig.3*

*Fig.4*

*Fig.5*

Fig:6

Fig:7

0052688

Fig. 10

Fig. 8

Fig. 9

Fig. 11

Fig. 12

**0052688**

Numéro de la demande

Office européen
des brevets

**RAPPORT DE RECHERCHE EUROPEENNE**  EP 80 40 1684

| Catégorie | Citation du document avec indication, en cas de besoin, des parties pertinentes | Revendication concernée |
|---|---|---|
| | FR - A - 2 422 474 (MANNESMANN)<br>* Pages 7 et 8 *<br>& NL - A - 79 01586<br><br>-- | 1-6 |
| | DE - A - 1 752 951 (DRECHSLER)<br>* Page 5, page 3, alinéa 2 *<br><br>---- | 1,2,4-6,9 |

## DOCUMENTS CONSIDERES COMME PERTINENTS

**CLASSEMENT DE LA DEMANDE (Int. Cl.³)**

B 23 K 11/08

**DOMAINES TECHNIQUES RECHERCHES (Int. Cl.³)**

B 23 K 11/08

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 07-08-1981 | HOORNAERT |

OEB Form 1503.1  06.78